# EUROPÄISCHE PATENTSCHRIFT

(11) **EP 3 674 055 B1**
(45) Veröffentlichungstag und Bekanntmachung des Hinweises auf die Patenterteilung: **08.06.2022**
(21) Anmeldenummer: 19218165.9
(22) Anmeldetag: 19.12.2019
(51) Int. Cl.: B29C 45/37, H01Q 7/08, B29L 31/34, H01Q 1/40, H01Q 1/42, B29C 45/40, B29C 45/44, H01F 27/32

(54) **FORMWERKZEUG ZUM FORMEN EINES STABFÖRMIGEN GEHÄUSES FÜR EINE STABANTENNE, VERFAHREN ZUM HERSTELLEN EINES STABFÖRMIGEN GEHÄUSES UND STABANTENNE**
MOULD FOR FORMING A ROD-SHAPED HOUSING FOR A ROD ANTENNA, METHOD FOR MANUFACTURING A ROD-SHAPED HOUSING AND ROD ANTENNA
OUTIL DE MOULAGE PERMETTANT DE MOULER UN BOÎTIER EN FORME DE TIGE POUR UNE ANTENNE TIGE, PROCÉDÉ DE FABRICATION D'UN BOÎTIER EN FORME DE TIGE ET ANTENNE TIGE

(30) Priorität: 19.12.2018 DE 102018222368
(43) Veröffentlichungstag der Anmeldung: 01.07.2020
(73) Patentinhaber: SUMIDA Components & Modules GmbH, 94130 Obernzell (DE)
(72) Erfinder: Resch, Horst, 94130 Obernzell (DE)
(74) Vertreter: Grünecker Patent- und Rechtsanwälte PartG mbB

(56) Entgegenhaltungen:
- EP-A1- 0 644 467
- EP-A1- 2 804 256
- EP-A2- 1 113 338
- WO-A1-2018/216453
- JP-A- 2015 005 810
- US-A1- 2008 030 423

## Beschreibung

Die vorliegende Erfindung betrifft ein Formwerkzeug zum Formen eines stabförmigen Gehäuses für eine Stabantenne, ein Verfahren zum Herstellen eines stabförmigen Gehäuses für eine Stabantenne und eine Stabantenne, die entsprechend hergestellt wird.

Im Allgemeinen werden Magnetantennen dazu eingesetzt, den magnetischen Teil eines elektromagnetischen Felds zu erzeugen oder zu empfangen, je nachdem, ob sie als Sender oder Empfänger eingesetzt werden. Beispiele für eine Magnetantenne werden durch eine Ferritstabantenne und eine Rahmenantenne bereitgestellt.

Eine Ferritstabantenne oder Ferritantenne stellt ein Beispiel für eine Stabantenne dar, die durch eine Spule aus isoliertem Schaltdraht oder einer Hochfrequenzlitze auf einem Ferritstab gebildet wird. Diese Antenne eignet sich für den Empfang von Längstwellen, Langwellen, Mittelwellen oder gegebenenfalls auch Kurzwellen und für Sonderanwendungen in der Telekommunikation, gelegentlich auch bei Ultrakurzwelle.

Da Ferritstabantennen bei vergleichbaren Empfangsleistungen nur etwa 1/20 des Raumbedarfs einer üblicherweise verwendeten Rahmenantenne beanspruchen, werden diese weitgehend durch Ferritstabantennen abgelöst. Beispielsweise weist eine Ferritstabantenne mit einem Spulensatz für Langwelle, Mittelwelle und Kurzwelle eine Länge von 160 mm auf. Demgegenüber wird eine Rahmenantenne, die eine andere Art von Magnetantenne zum Empfang von Längstwellen, Langwellen, Mittelwellen oder gegebenenfalls auch Kurzwellen darstellt, durch eine meist auf einen Rahmen mit möglichst großem Querschnitt (bis zu ca. 30 cm) montierte Luftspule bereitgestellt, die als Empfangsantenne für Längstwellen, Mittelwellen und Kurzwellen verwendet wird.

Für gewöhnlich wird eine Ferritstabantenne dadurch hergestellt, dass ein Ferritstabkern in ein Gehäuse eingesetzt wird, das mit einem Draht bewickelt ist. Dabei wird zum werkseitigen Grundabgleich die Spule auf den Ferritstabkern und insbesondere über das Gehäuse geschoben und mit einem Kleber fixiert. Das Gehäuse stellt in der Regel ein Spritzgussteil dar, das aus einem Spritzmaterial mittels Spritzgusstechnik gebildet wird. Diese Gehäuse werden mittels eines Spritzwerkzeugs gebildet, wobei ein Formkern, der sich in einem Formgegenstück befindet, mit einem Spritzmaterial umspritzt wird. Der Formkern ist ein längliches Kernelement, das in seiner Gestalt dem bei der Herstellung der Stabantenne in das Gehäuse einzusetzenden Ferritstabkern entspricht. Das Gehäuse an sich ist für gewöhnlich in einer länglichen Gestalt ausgebildet und weist eine Öffnung auf, in die der Ferritstabkern bei der Herstellung der Stabantenne einzusetzen ist.

Im weiteren Herstellungsverlauf wird der Formkern zuerst mechanisch oder hydraulisch aus dem hergestellten Gehäuse entfernt und anschließend wird das Gehäuse nach dem Öffnen des Spritzwerkzeugs aus dem Spritzwerkzeug ausgeworfen. Zum Entformen des Formkerns sind hierbei für gewöhnlich Kräfte erforderlich, die zu einer Beschädigung des erzeugten Gehäuses führen können, wenn der Formkern aus dem Gehäuse herausgelöst wird.

Die Schrift EP 2 804 256 A1 zeigt eine Antennenvorrichtung und ihr Herstellungsverfahren. Dabei weist die Antennenvorrichtung einen Kernkörper mit einem aus einem magnetischen Material gebildeten Kern, einen Spulenkörper mit einer Spule und einer Öffnung, durch die der Kernkörper in den Spulenkörper eingeführt ist, und ein Gehäuse auf, das den Spulenkörper mit der Spule und den Kernkörper einhaust. Im Herstellungsverfahren wird der Spulenkörper mit einem Kern, der dem Kernkörper entspricht und an dessen Stelle vorgesehen ist, in einem Formwerkzeug angeordnet, so dass der Spulenkörper in das Gehäuse beim Spritzgießen integriert wird. Anschließend wird der Kernkörper in den Spulenkörper eingesetzt, der in das Gehäuse integriert ist.

Aus der Schrift WO 2019/216453 A1 ist eine Antennenvorrichtung bekannt, die eine Antennenspule, ein aus Harz hergestelltes Antennengehäuse mit einem Körper, der die Antennenspule aufnimmt, und einer Rippe umfasst, die auf einer oberen Oberfläche des Körpers und auf einem Paar gegenüberliegender Seitenflächen angeordnet ist. Im Antennengehäuse ist die Rippe kontinuierlich von einer der Seitenflächen über die Oberseite zur anderen der Seitenflächen gebildet und beide Enden der Rippe sind so ausgebildet, dass sie zu einer Unterseite des Körpers bündig sind oder sich von der Unterseite des Körpers nach unten erstreckt. Darüber hinaus sind beide Enden der Rippe so ausgelegt, dass sie mit einem externen Element in Kontakt kommen, wenn die Antennenvorrichtung an dem externen Element montiert ist.

Es ist wünschenswert, ein Formwerkzeug zum Formen eines stabförmigen Gehäuses für eine Stabantenne, ein Verfahren zum Herstellen eines stabförmigen Gehäuses für eine Stabantenne und ein stabförmiges Gehäuse bereitzustellen, bei dem eine Beschädigung des stabförmigen Gehäuses beim Entformen des Formkerns vermieden wird.

Die oben genannte Aufgabe wird im Rahmen der vorliegenden Erfindung dadurch gelöst, dass ein Formwerkzeug zum Formen eines stabförmigen Gehäuses für eine Stabantenne gemäß dem unabhängigen Anspruch 1, ein Verfahren zum Herstellen eines stabförmigen Gehäuses für eine Stabantenne gemäß Anspruch 7 und eine Stabantenne gemäß Anspruch 9 bereitgestellt wird, wobei beim Entformen auftretende Kräfte durch eine bei der Herstellung des Gehäuses an diesem bereitgestellte Struktur aufgenommen werden. Vorteilhafte Ausgestaltungen des Formwerkzeugs gemäß Anspruch 1 sind in den abhängigen Ansprüchen 2 bis 6 definiert. Vorteilhafte Ausgestaltungen des Verfahrens gemäß Anspruch 7 werden im abhängigen Anspruch 8 definiert. Eine vorteilhafte Stabantenne wird in den abhängigen Ansprüchen 10 bis 13 definiert.

In einem Aspekt der Erfindung wird ein Formwerkzeug zum Formen eines stabförmigen Gehäuses für eine Stabantenne bereitgestellt, wobei das Formwerkzeug einen stabförmigen Formkern und ein Formgegenstück mit einer Ausnahme umfasst, in die der Formkern einsetzbar ist. Das Formgegenstück weist dabei eine Mehrzahl von Vertiefungen und/oder Auskragungen auf, die in wenigstens einer Oberfläche der Aufnahme gebildet sind und die entlang einer Richtung verlaufen, die zu einer Längsrichtung des Formgegenstücks quer orientiert ist. Dabei wird durch die Vertiefungen und/oder Auskragungen im Formgegenstück eine Struktur an einem herzustellenden stabförmigen Gehäuse erzeugt, die für jede Vertiefung, die durch das Formwerkzeug im stabförmigen Gehäuse gebildet wird, eine Seitenwand mit einer Neigung unter einem spitzen Winkel relativ zur Seitenfläche des Gehäuses vorgesehen ist, wobei diese Seitenwand eine Kraft aufnimmt, die bei einem Entformen des Formkerns aus dem Gehäuse auftritt. Dadurch werden die beim Entformen eines Formkerns nach Aushärtung eines Spritzmaterials zum Abschluss eines Spritzverfahrens zur Herstellung eines stabförmigen Gehäuses auftretende mechanische Kräfte durch das Gehäuse vorteilhaft aufgenommen, sodass das Gehäuse keine mechanische Krafteinwirkung erfährt, die dieses beschädigen kann.

In einer vorteilhaften Ausgestaltung des Formwerkzeugs dieses Aspekts sind die Vertiefungen und/oder Auskragungen zueinander parallel orientiert. Dadurch werden auf einfache Weise Strukturen an einem herzustellenden stabförmigen Gehäuse erzeugt, die in vorteilhafter Weise Kräfte aufnehmen können, wobei eine asymmetrische Einwirkung von Kräften vermieden wird.

In einer weiteren vorteilhaften Ausgestaltung des Formwerkzeugs dieses Aspekts ist die Aufnahme derart ausgebildet, dass der Formkern entlang einer Längsrichtung des Formkerns in die Aufnahme eingeschoben werden kann. Dies erlaubt die Ausgestaltung der Aufnahme durch das Formgegenstück in einer Gestalt, die einer Außengestalt eines herzustellenden stabförmigen Gehäuses entspricht. Weiterhin kann ein vorteilhaftes Entformen des Formkerns nach einem Spritzguss und wenn ein Spritzgussmaterial ausgehärtet ist, durch die Mehrzahl von Vertiefungen/Auskragungen des Formwerkzeugs erreicht werden, die mit entsprechenden Vertiefungen/Auskragungen an einem hergestellten Gehäuse in Eingriff stehen und die beim Entformen auftretenden Kräfte aufnehmen.

In einer vorteilhaften Ausgestaltung des Formwerkzeugs dieses Aspekts ist die Mehrzahl von Vertiefungen und/oder Auskragungen in regelmäßigen Abständen entlang der Längsrichtung des Formgegenstücks gebildet. Dadurch lässt sich eine vielseitige Struktur zum Aufnehmen von Kräften bereitstellen, die beim Entformen von Formkernen auftreten können, wobei die Kräfte entlang der Seitenfläche eines herzustellenden Gehäuses gleichmäßig verteilt werden. In einer weiteren vorteilhaften Ausgestaltung des Formwerkzeugs dieses Aspekts ist die Mehrzahl von Vertiefungen und/oder Auskragungen aus Paaren von Vertiefungen und Auskragungen gebildet, die an einander gegenüberliegenden Oberflächen des Formgegenstücks in der Aufnahme gebildet sind. Dadurch lässt sich eine Struktur bereitstellen, in der Kräfte vorteilhaft durch das stabförmige Gehäuse beim Entformen des Formkerns aufgenommen werden können.

In einer weiteren vorteilhaften Ausgestaltung des Formwerkzeugs dieses Aspekts weist jede aus der Mehrzahl von Vertiefungen und/oder Auskragungen in Aufsicht eine streifenförmige, z.B. trapezförmige oder dreieckige, Gestalt auf. Damit werden vorteilhafte Gestaltungen für die zu bildenden Strukturen zur Aufnahme von Kräften in herzustellenden stabförmigen Gehäusen ermöglicht.

In einem weiteren Aspekt wird ein Verfahren zum Herstellen eines stabförmigen Gehäuses für eine Stabantenne bereitgestellt, wobei das Verfahren in dieser Reihenfolge ein Bereitstellen des Formwerkzeugs nach dem obigen Aspekt, ein Anordnen des Formkerns in der Aufnahme des Formgegenstücks, ein Einspritzen eines Spritzmaterials in das Formwerkzeug, wobei nach einem Aushärten des Spritzmaterials ein stabförmiges Gehäuse in dem Formwerkzeug erzeugt wird, wobei das stabförmige Gehäuse eine Mehrzahl von Vertiefungen aufweist, und ein Entformen des Formkerns von dem erzeugten stabförmigen Gehäuse umfasst, wobei die Mehrzahl von Vertiefungen des stabförmigen Gehäuses beim Entformen des Formkerns mit der Mehrzahl von Vertiefungen oder Auskragungen des Formgegenstücks in Eingriff steht. Dabei wird zwischen dem Formkern und dem stabförmigen Gehäuse eine Kraft aufgewendet, um den Formkern aus dem stabförmigen Gehäuse zu entfernen, wobei mechanische Kräfte, die beim Entfernen des Formkerns aus dem stabförmigen Gehäuse auftreten, durch die Mehrzahl von Vertiefungen aufgenommen werden.

In diesem Verfahren werden vorteilhafterweise mechanische Kräfte, die beim Entformen des Formkerns auftreten, durch die Mehrzahl von Vertiefungen aufgenommen, so dass eine Beschädigung des herzustellenden stabförmigen Gehäuses beim Entformen vermieden wird.

In einer vorteilhaften Ausgestaltung des Verfahrens gemäß diesem Aspekt weist die Mehrzahl von Vertiefungen ein Paar von Vertiefungen auf, die in gegenüberliegenden Seitenflächen des stabförmigen Gehäuses gebildet sind. Ferner weist die Mehrzahl von Vertiefungen des stabförmigen Gehäuses ein Paar von Vertiefungen aufweist, die in gegenüberliegenden Seitenflächen des stabförmigen Gehäuses gebildet sind und mit entsprechenden Vertiefungen oder Auskragungen der Mehrzahl von Vertiefungen oder Auskragungen des Formgegenstücks beim Entformen in Eingriff steht. Beim Entformen des Formkerns erlaubt das an gegenüberliegenden Seitenflächen des stabförmigen Gehäuses und des Formgegenstücks bereitgestellte Paar von Vertiefungen eine vorteilhafte Halterung des stabförmigen Gehäuses im Formwerkzeug, wobei Kräfte an gegenüberliegenden Seitenflächen des stabförmigen Gehäuses angreifen und somit eine vorteilhafte Verteilung von Kräften auf die gegenüberliegenden Seiten des stabförmigen Gehäuses erfolgt.

In einem weiteren Aspekt wird eine Stabantenne mit einem stabförmigen Gehäuse und einem Magnetkern bereitgestellt, der in das stabförmige Gehäuse aufgenommen ist, wobei das stabförmige Gehäuse gemäß dem Verfahren nach dem obigen Aspekt hergestellt wird. Dieses Gehäuse ist dadurch weniger anfällig für Beschädigungen, die durch das Entformen von Formkernen nach dem Spritzgießen hervorgerufen werden.

In einer vorteilhaften Ausgestaltung des stabförmigen Gehäuses gemäß dem obigen Aspekt ist die Mehrzahl von Vertiefungen in lediglich einer Seitenfläche des stabförmigen Gehäuses oder die Mehrzahl von Vertiefungen ist aus Paaren von Vertiefungen gebildet, die in gegenüberliegenden Seitenflächen des stabförmigen Gehäuses gebildet sind, wobei die Vertiefungen als Vertiefungen ausgebildet sind, die entlang einer Längsrichtung des stabförmigen Gehäuses in regelmäßigem Abstand gebildet sind. Die beim Entformen auftretenden Kräfte werden dadurch entlang der Seitenfläche eines herzustellenden Gehäuses gleichmäßig verteilt.

Gemäß einigen anschaulichen Ausgestaltungen hierin kann die Mehrzahl von Vertiefungen aus Vertiefungen gebildet sein, die lediglich in einer Seitenfläche des stabförmigen Gehäuses gebildet sind, beispielsweise als Vertiefungen, die entlang einer Längsrichtung des stabförmigen Gehäuses in regelmäßigem Abstand gebildet sind, und/oder die Mehrzahl von Vertiefungen kann als taschenförmige Vertiefungen ausgebildet sind, die entlang einer Längsrichtung des stabförmigen Gehäuses in regelmäßigem Abstand gebildet sind.

In einigen anschaulichen Beispielen kann eine Seitenwand von wenigstens einer aus der Mehrzahl von Vertiefungen relativ zu einer Seitenfläche des Gehäuses, in der die Seitenwand gebildet ist, unter einem Winkel geneigt sein, der um wenigstens 2° von 90° abweicht. Diese wenigstens eine Seitenwand kann sich gemäß einigen anschaulichen Beispielen entlang einer Richtung erstreckt, die zu einer Längsrichtung des stabförmigen Gehäuses quer orientiert ist. Hierin kann eine Kraft, die beim Entformen eines Formkerns aus dem stabförmigen Gehäuse bei einer Herstellung des stabförmigen Gehäuses auftritt, vorteilhaft durch einen Eingriff zwischen dieser Seitenwand und einer entsprechenden Gegenstruktur in einem Formwerkzeug aufgenommen werden.

Weitere Vorteile und Effekte gemäß den oben beschriebenen Aspekten gehen aus der folgenden Beschreibung von einzelnen Ausführungsformen hervor, die nachstehend erfolgt. Dabei wird auf die beiliegenden Zeichnungen Bezug genommen, in denen:
Fig. 1 ein stabförmiges Gehäuse gemäß anschaulichen Ausführungsformen der Erfindung darstellt;
Fig. 2 schematisch eine Schnittansicht eines Formwerkzeugs zum Formen eines stabförmigen Gehäuses darstellt; und
Fig. 3 einen Verlauf eines Verfahrens zum Herstellen eines stabförmigen Gehäuses für eine Stabantenne gemäß Ausführungsformen der Erfindung darstellt.

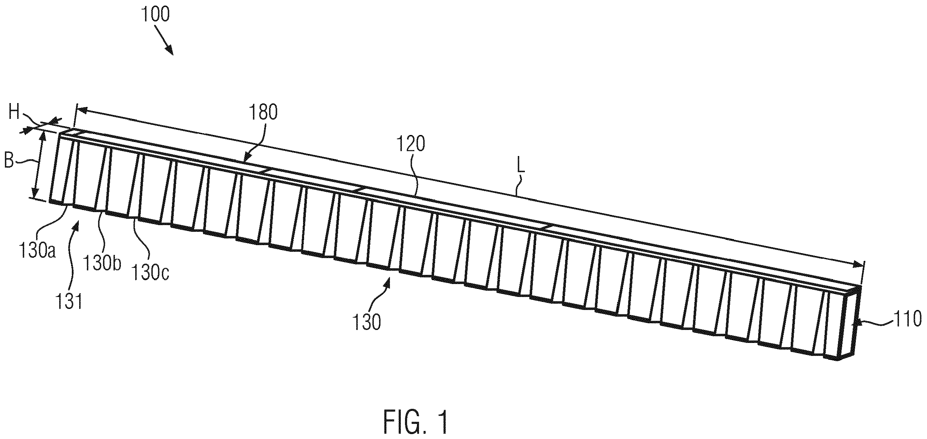

Mit Bezug auf Fig. 1 wird ein stabförmiges Gehäuse für eine Stabantenne gemäß Ausführungsformen der vorliegenden Erfindung näher beschrieben.

Fig. 1 zeigt, in einer schematischen perspektivischen Ansicht, ein stabförmiges Gehäuse 100, das für eine Stabantenne, beispielsweise eine Ferritstabantenne, verwendet werden kann. Das stabförmige Gehäuse 100 ist stabförmig ausgebildet, d.h., eine Längsabmessung L des stabförmigen Gehäuses 100 ist größer als eine Breitenabmessung B und eine Höhenabmessung H, die jeweils zueinander senkrecht orientiert sind. Gemäß einigen anschaulichen Beispielen hierin kann ein Aspektverhältnis aus der Längenabmessung L zu der Breitenabmessung B wenigstens 2, 5, 10 oder 15 betragen. Gemäß einem speziellen anschaulichen Beispiel kann das Aspektverhältnis aus der Längenabmessung L zu der Breitenabmessung B im Bereich von 11 bis 13 liegen, beispielsweise kann es ca. 12 betragen. Weiterhin kann ein Aspektverhältnis aus der Längenabmessung L zu der Höhenabmessung H wenigstens 2, 5, 10, 20, 30, 40 oder 50 betragen. Gemäß einem speziellen anschaulichen Beispiel kann das Aspektverhältnis aus der Längenabmessung L zu der Höhenabmessung H im Bereich von 55 bis 58 liegen, beispielsweise 57 betragen.

Obgleich das stabförmige Gehäuse 100 in einer quaderförmigen Gestalt dargestellt ist, stellt dies keine Beschränkung dar und stattdessen kann eine zylindrische Gestalt oder eine andere längliche Gestalt mit einem polygonalen Querschnitt umgesetzt sein.

Mit weiteren Bezug auf Fig. 1 weist das stabförmige Gehäuse 100 eine Öffnung 110 auf, in die ein Stabkern (nicht dargestellt), beispielsweise ein Ferritstabkern, aufgenommen wird. Beispielsweise kann ein Stabkern (nicht dargestellt) durch die Öffnung 110 entlang der Längenabmessung L in das stabförmige Gehäuse 100 eingeschoben werden. Optional können weiterhin in einer Seitenfläche 180 des stabförmigen Gehäuses 100 ein oder mehrere Durchbrüche 120 gebildet sein, die mit der Öffnung 110 des stabförmigen Gehäuses 100 verbunden sind.

Mit weiterem Bezug auf Fig. 1 ist in einer weiteren Seitenfläche des stabförmigen Gehäuses 100, beispielsweise eine Seitenfläche des stabförmigen Gehäuses 100 senkrecht zu der Seitenfläche 100 und zu der Seitenfläche mit der Öffnung 110, eine Mehrzahl von Vertiefungen 130 gebildet.

In beispielhaften Ausführungsformen kann die Mehrzahl von Vertiefungen 130 durch wenigstens zwei Vertiefungen in wenigstens einer Seitenfläche des stabförmigen Gehäuses 100 bereitgestellt werden, z.B. in zwei einander gegenüberliegenden Seitenflächen des stabförmigen Gehäuses 100, die beispielsweise senkrecht zu der Seitenfläche 100 und zu der Seitenfläche mit der Öffnung 110 orientiert sind.

In einigen anschaulichen Beispielen kann die Mehrzahl von Vertiefungen 130 Vertiefungen umfassen, die als taschenförmige Vertiefungen ausgebildet sind. Gemäß einigen anschaulichen Beispielen kann die Mehrzahl von Vertiefungen 130 als wenigstens zwei streifenförmige Vertiefungen 130a, 130b umfassend ausgebildet sein, wobei die Mehrzahl von Vertiefungen z.B. eine trapezförmige oder dreieckige Gestalt in Aufsicht aufweisen kann. Der Begriff "streifenförmig" bedeutet, dass eine Abmessung einer Vertiefung (in Aufsicht) entlang einer Richtung quer zur Längsabmessung L des stabförmigen Gehäuses 100 größer ist als eine Abmessung entlang der Längsabmessung L des stabförmigen Gehäuses 100. Der Begriff "taschenförmig" kann eine Vertiefung bezeichnen, die keinen vollständigen Durchbruch im Material des Gehäuses der Stabantenne bezeichnet. In Aufsicht kann eine taschenförmige Vertiefung im Wesentlichen von einer Gestalt sein, die streifenförmig ist oder nicht streifenförmig ist, beispielsweise elliptisch, kreisförmig, quadratisch usw. Eine entsprechende taschenförmige Vertiefung stellt in einigen anschaulichen Ausführungsformen eine konkave Vertiefung in einer Seitenfläche eines Gehäuses einer Stabantenne dar, wobei die Vertiefung nicht vollständig entlang einer Breitenabmessung einer Seitenfläche des Gehäuses gebildet ist bzw. die Vertiefung sich lediglich teilweise entlang einer Breitenabmessung einer Seitenfläche des Gehäuses gebildet ist.

Gemäß beispielhaften Ausführungsformen der Erfindung können wenigstens einige Seitenwände von Vertiefungen im Gehäuse bezüglich einer Seitenfläche des Gehäuses eine Neigung aufweisen, die größer ist als 90°, insbesondere kann ein Winkel, der zwischen einer Seitenwand einer Vertiefung und einer Seitenfläche des Gehäuses gebildet ist, ein stumpfer Winkel sein, insbesondere nicht kleiner als 90° sein. Hierbei kann ein Lösen des Gehäuses nach einem Vergießen leichter erfolgen, ohne beispielsweise zu Beschädigungen an den Vertiefungen des Gehäuses zu führen. Beispielsweise werden Neigungen von Seitenwänden von Vertiefungen am Gehäuse so eingestellt, dass ein Auslösen des durch Spritzguss hergestellten Gehäuses aus einem Formwerkzeug einfach erfolgen kann, ohne das Gehäuse zu beschädigen, z.B. indem Hinterschneidungen an den Vertiefungen des Gehäuses und den Vertiefungen und/oder Auskragungen des Formwerkzeugs vermieden werden. Mit anderen Worten, die Seitenwände und/oder Auskragungen können derart ausgebildet sein, dass Hinterschneidungen zwischen den Vertiefungen im Gehäuse und den damit in Eingriff stehenden Strukturen des Formwerkzeugs vermieden werden.

In anschaulichen Beispielen können Neigungen von wenigstens einigen Seitenwänden von Vertiefungen der Mehrzahl von Vertiefungen des Gehäuses um wenigstens 2° von 90° relativ zu einer Seitenfläche des Gehäuses, in der diese Seitenwände gebildet sind, abweichen.

Gemäß der Darstellung in Fig. 1 erstrecken sich die Vertiefungen der Mehrzahl von Vertiefungen 130 in der Breitenabmessung B der Seitenfläche nahezu vollständig (> 90% der Breitenabmessung B der Seitenfläche) entlang der gesamten Seitenfläche. Dies stellt keine Beschränkung dar und alternativ können die Vertiefungen sich nur teilweise entlang der Seitenfläche erstrecken. Gemäß einem Beispiel können sich die Vertiefungen beispielsweise entlang von 40% bis 90% der Breitenabmessung B der Seitenfläche, vorzugsweise 50% bis 80% oder 50% bis 60% der Seitenfläche erstrecken.

Gemäß einigen anschaulichen Beispielen, in denen die Mehrzahl von Vertiefungen durch wenigstens drei Vertiefungen 130a, 130b, 130c gebildet wird, sind die Vertiefungen 130a, 130b und 130c unter regelmäßigen Abständen entlang der Längsabmessung L des stabförmigen Gehäuses 100 angeordnet.

Gemäß einigen anschaulichen Ausführungsformen der vorliegenden Erfindung wird das stabförmige Gehäuse 100 aus einem Spritzmaterial durch Spritzgießen gebildet, beispielsweise mit einem thermoplastischen Material, welches relativ zu einem Elastomer hart ist.

Gemäß einigen anschaulichen Ausführungsformen der vorliegenden Erfindung ist zusätzlich zu der dargestellten Mehrzahl von Vertiefungen eine weitere Mehrzahl von Vertiefungen (nicht dargestellt) in der gegenüberliegenden Seitenfläche des stabförmigen Gehäuses ausgebildet, die in Fig. 1 nicht einsehbar ist. Beispielsweise ist jede der Vertiefungen 130a, 130b (und 130c) mit einer entsprechenden Vertiefung (in Fig. 1 nicht dargestellt) gepaart, die in der gegenüberliegenden Seitenfläche (in Fig. 1 nicht dargestellt) des stabförmigen Gehäuses 100 ausgebildet ist. Dabei können gepaarte Vertiefungen entlang der Höhenabmessung H als zueinander gegenüberliegend angeordnet sein. Das bedeutet, dass die Mehrzahl von Vertiefungen 130a, 130b (und 130c), die in Fig. 1 dargestellt ist, bezüglich einer durch das stabförmige Gehäuse 100 verlaufenden Ebene, die die Längenabmessung L und die Breitenabmessung B und einen Schwerpunkt des stabförmigen Gehäuses 100 umfasst, spiegelsymmetrisch zu der in Fig. 1 nicht einsehbaren Mehrzahl von Vertiefungen ausgebildet ist, die in der gegenüberliegenden Seitenfläche des stabförmigen Gehäuses 100 ausgebildet sind. Es kann aber auch verstanden werden, dass zwischen zwei benachbarten Vertiefungen (z.B. 130a, 130b) jeweils eine Auskragung (z.B. 131) gebildet ist.

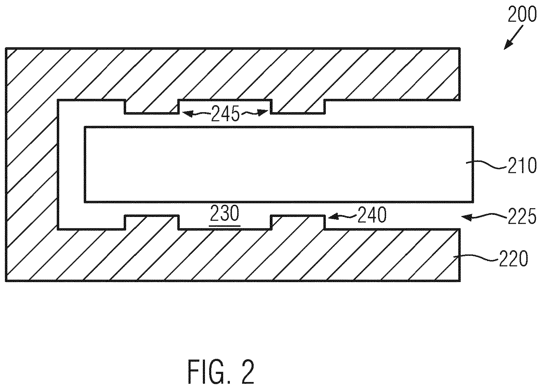

Mit Bezug auf Fig. 2 wird nun ein Formwerkzeug 200 beschrieben, das zur Herstellung des stabförmigen Gehäuses 100 in Fig. 1 verwendet werden kann. Das in Fig. 2 dargestellte Formwerkzeug 200 umfasst einen stabförmigen Formkern 210 und ein stabförmiges Formgegenstück 220 mit einer Aufnahme 225, in die der Formkern 210 einsetzbar ist. Zwischen dem stabförmigen Formkern 210 und dem stabförmigen Formgegenstück 220 ist ein Spalt 230 gebildet, in dem das Spritzmaterial während eines Spritzgießvorgangs eingefüllt und nach dessen Aushärten eine Seitenwand des stabförmigen Gehäuses gebildet wird, das im Spritzgießvorgang mittels des Formwerkzeugs 200 herzustellen ist. Das dabei verwendete Spritzmaterial kann gemäß beispielhaften Ausführungsformen ein Thermoplastmaterial sein.

Gemäß der in Fig. 2 dargestellten anschaulichen Ausführungsformen der Erfindung sind Auskragungen 240, beispielsweise Auskragungen oder Vertiefungen mit benachbarten Auskragungen als Gegenstück zu den oben beschriebenen taschenförmigen Vertiefungen, in dem Formgegenstück gebildet, so dass sie zueinander parallel orientiert sind. Dadurch lässt sich ein reproduzierbares Muster von Vertiefungen in dem herzustellenden stabförmigen Gehäuse bilden. Es kann aber auch verstanden werden, dass zwischen zwei benachbarten Vertiefungen 240 jeweils eine Auskragung 245 gebildet ist. Folglich weist das Formgegenstück 220 eine Mehrzahl von Vertiefungen 245 und/oder Auskragungen 240 auf, die in wenigstens einer Oberfläche der Aufnahme 225 gebildet sind und die sich entlang einer Richtung erstrecken, die zu einer Längsrichtung des stabförmigen Formgegenstücks 220 quer orientiert ist. Die Mehrzahl von Vertiefungen 245 und/oder Auskragungen 240 kann dabei in regelmäßigen Abständen entlang der Längsrichtung des Formgegenstücks 220 gebildet sein. Ferner kann die Mehrzahl von Vertiefungen 245 oder Auskragungen 240 aus Paaren von Vertiefungen und/oder Auskragungen gebildet sein, die an einander gegenüberliegenden Oberflächen des Formgegenstücks 220 in der Aufnahme 225 gebildet sind. Außerdem kann jede aus der Mehrzahl von Vertiefungen 245 und/oder Auskragungen 240 in Aufsicht eine taschenförmige und/oder streifenförmige Gestalt aufweisen.

Gemäß beispielhaften Ausführungsformen der Erfindung können wenigstens einige der Auskragungen 240 bezüglich einer Seitenfläche des Gehäuses eine Neigung aufweisen, die von 90° relativ dazu abweichen kann. Beispielsweise kann die Neigung größer sein als 90°, insbesondere kann ein Winkel, der von einer Seitenwand der Auskragung 245 relativ zu einer Seitenfläche des Gehäuses gebildet ist, ein stumpfer Winkel sein (d.h. der Winkel ist nicht kleiner ist als 90°). Hierbei kann ein Lösen des Gehäuses nach einem Vergießen und Entformen eines Formkerns leichter erfolgen, ohne beispielsweise zu Beschädigungen am Gehäuse zu führen.

In den Ausführungsformen weist eine Neigung von wenigstens einer Seitenwand einer Vertiefung in einer Seitenfläche des Gehäuses einen Winkel auf, der einen spitzen Winkel (kleiner 90°) zwischen der Seitenwand und der Seitenfläche einschließt, wobei die Seitenwand derart orientiert ist, dass eine Normale der Seitenwand im Wesentlichen entlang einer Richtung orientiert ist, die zu einer Richtung im Wesentlichen parallel ist, entlang der ein Formkern nach einem Spritzvorgang aus dem Gehäuse entformt wird. Für jede Vertiefung im Gehäuse ist eine Seitenwand mit einer Neigung unter einem spitzen Winkel relativ zur Seitenfläche des Gehäuses vorgesehen sein, wobei diese Seitenwand eine Kraft aufnimmt, die beim Entformen des Formkerns aus dem Gehäuse auftritt. Der Begriff "im Wesentlichen" kann hier eine Abweichung von höchstens 30° bezeichnen, beispielsweise höchstens 20° oder höchstens 15° oder höchstens 10° oder höchstens 5°.

Hinsichtlich der in Fig. 1 dargestellten Ausführungsform kann beispielsweise eine Seitenwand der Vertiefung 130b unter einem spitzen Winkel zu der Seitenfläche des Gehäuses 100 geneigt sein, in der die Vertiefung 130b gebildet ist. In einem speziellen anschaulichen Beispiel hierin ist diese Seitenwand der Vertiefung 130b in der Darstellung von Fig. 1 die linke Seitenwand der Vertiefung 130b, die entlang der Breitenabmessung B in Fig. 1 verläuft. In diesem Fall ist eine Flächennormale dieser Seitenwand der Vertiefung 130b im Wesentlichen zu einer Richtung parallel orientiert, entlang der ein Formkern aus dem Gehäuse 100 durch die Öffnung 110 herausgezogen wird. Die rechte Seitenwand der Vertiefung 130b kann einen stumpfen Winkel zur Seitenfläche des Gehäuses 100 aufweisen, um ein spätere Entformen des Gehäuses aus einem Formwerkzeug zu vereinfachen. Somit steht die Vertiefung 130b mit einer Auskragung im Formwerkzeug in Eingriff, so dass beim Entformen eines Formkerns die beim Entformen auftretenden Kräfte vorteilhaft aufgenommen werden.

Gemäß anschaulichen Ausführungsformen der Erfindung ist die Aufnahme 225 derart ausgebildet, dass der Formkern 210 entlang einer Längsrichtung des Formkerns 210 in die Aufnahme 225 eingeschoben werden kann. Dies stellt jedoch keine Beschränkung der Erfindung dar und alternativ kann das Formgegenstück in mehrteiliger Form, beispielsweise zweiteiliger Form oder dreiteiliger Form usw., mit einem Hohlraum ausgebildet sein, in dem der Formkern 210 vor dem Spritzgießen angeordnet und von den Hälften des Formgegenstücks in mehrteiliger Form, z.B. zweiteiliger Form, umgeben wird.

Gemäß anschaulichen Ausführungsformen der Erfindung kann die Mehrzahl von Vertiefungen und/oder Auskragungen (z.B. 130 bzw. 131 in Fig. 1 oder 240 bzw. 245 in Fig. 2) in regelmäßigen Abständen entlang der Längsrichtung des Formgegenstücks 120 gebildet sein.

Gemäß anschaulichen Ausführungsformen der Erfindung kann die Mehrzahl von Vertiefungen und/oder Auskragungen (z.B. 130 bzw. 131 in Fig. 1 oder 240 bzw. 245 in Fig. 2) aus Paaren von Vertiefungen und/oder Auskragungen gebildet sein, die an einander gegenüberliegenden Oberflächen des Formgegenstücks in der Aufnahme gebildet sind.

Gemäß anschaulichen Ausführungsformen der Erfindung kann jede aus der Mehrzahl von Vertiefungen und/oder Auskragungen (130 bzw. 131 in Fig. 1 oder 240 bzw. 245 in Fig. 2) eine trapezförmige oder dreieckige Gestalt in Aufsicht aufweisen.

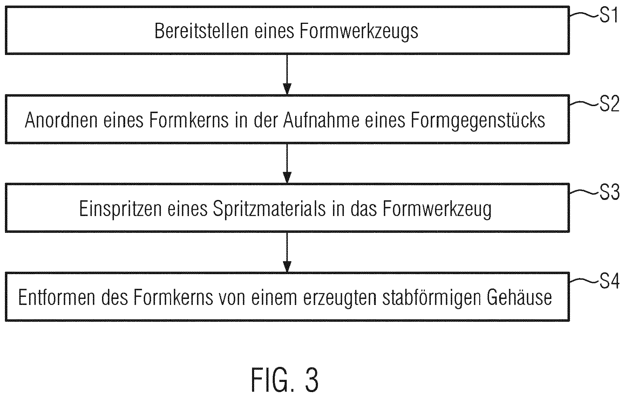

Mit Bezug auf Fig. 3 werden anschauliche Verfahren zum Herstellen eines stabförmigen Gehäuses für eine Stabantenne, etwa des stabförmigen Gehäuses 100, das in Fig. 1 gezeigt ist, beschrieben.

Dazu wird in Schritt S1 ein Formwerkzeug, beispielsweise das Formwerkzeug 200 gemäß der Darstellung in Fig. 2 der Anmeldung, bereitgestellt.

Bei Schritt S2 wird der Formkern, beispielsweise der Formkern 210 gemäß der Darstellung in Fig. 2, in der Aufnahme des Formgegenstücks, beispielsweise das Formgegenstück 220 in Fig. 2, angeordnet.

Ein Spritzmaterial wird in Schritt S3 in das Formwerkzeug eingespritzt, wobei nach einem Aushärten des Spritzmaterials ein stabförmiges Gehäuse in dem Formwerkzeug erzeugt wird. Das stabförmige Gehäuse weist dabei eine Mehrzahl von Vertiefungen auf, beispielsweise die Vertiefungen 131 bzw. Auskragungen 131, die in Fig. 1 dargestellt sind.

In Schritt S4 erfolgt ein Entformen des Formkerns von dem erzeugten stabförmigen Gehäuse, wobei die Mehrzahl von Vertiefungen am stabförmigen Gehäuse beim Entformen des Formkerns mit der Mehrzahl von Vertiefungen/Auskragungen des Formwerkzeugs in Eingriff steht und zwischen dem Formkern und dem stabförmigen Gehäuse eine Kraft aufgewendet wird, um den Formkern aus dem stabförmigen Gehäuse zu entfernen. Der Formkern wird dabei mechanisch oder hydraulisch aus dem hergestellten Gehäuse entfernt, beispielsweise aus dem Formwerkzeug seitlich herausgezogen. Dabei werden mechanische Kräfte, die beim Entfernen des Formkerns aus dem stabförmigen Gehäuse auftreten, durch die Mehrzahl von Vertiefungen aufgenommen. Anschließend wird das hergestellte Gehäuse nach dem Öffnen des Spritzwerkzeugs aus dem Spritzwerkzeug ausgeworfen.

In einigen speziellen anschaulichen Beispielen kann ein stabförmiges Gehäuse eine Abmessung in Längsrichtung in einem Bereich von 10 cm bis 30 cm aufweisen, beispielsweise von 10 cm bis 20 cm oder von 15 cm bis 20 cm oder von 10 cm bis 25 cm oder von 15 cm bis 25 cm oder von 20 cm bis 25 cm oder von 15 cm bis 30 cm oder von 20 cm bis 30 cm oder von 25 cm bis 30 cm. Alternativ kann eine Abmessung in Längsrichtung in einem Bereich von 30 cm bis 35 cm oder von 35 cm bis 40 cm oder von 40 cm bis 45 cm oder von 45 cm bis 50 cm liegen.

In einigen speziellen anschaulichen Beispielen kann ein stabförmiges Gehäuse eine Abmessung in Breitenrichtung in einem Bereich von 1cm bis 5 cm aufweisen, etwa in einem Bereich von 1 cm bis 3 cm oder von 2 cm bis 3 cm oder von 2 cm bis 4 cm oder von 3 cm bis 4 cm oder von 4 cm bis 5 cm.

In einigen speziellen anschaulichen Beispielen kann die Mehrzahl von Vertiefungen im stabförmigen Gehäuse eine Tiefe von 0,1 mm bis 5 mm aufweisen, etwa in einem Bereich von 0,1 mm bis 1mm oder von 0,1 mm bis 0,5 mm oder von 0,2 mm bis 0,5 mm oder von 0,3 mm bis 0,5 mm oder von 0,4 mm bis 0,6 mm oder von 0,6 mm bis 0,8 mm oder von 0,8 mm bis 1 mm oder von 1 mm bis 2 mm oder von 2 mm bis 3 mm oder von 2 mm bis 4 mm oder von 3 mm bis 4 mm oder von 4 mm bis 5 mm.

Die oben dargelegten expliziten Maßangaben sind nicht beschränkend, da die Maße für die Vertiefungen beispielsweise von Eigenschaften des Materials abhängen, das für die Herstellung des Gehäuses verwendet wird, so dass bei einem weicheren Material die Maßangaben für die Vertiefungen und Neigungswinkel von Seitenwänden größer sein können, als bei einem härteren Material, und auch größer sein können, als explizit angegebene Bereichsgrenzen. Im Allgemeinen sind die Vertiefungen am Gehäuse so ausgebildet, dass die Vertiefungen die beim Entformen von Formkernen auftretenden Kräfte vorteilhaft aufnehmen können, ohne dass Beschädigungen am Gehäuse beim Entformen des Formkerns auftreten. Die Vertiefungen, insbesondere die Seitenwände der Vertiefungen, stellen dabei eine stabilisierende und unterstützende Struktur bereit, die eine stabile Halterung des Gehäuses im Formwerkzeug während des Entformens eines Formkerns aus dem Gehäuse gewährleisten.

Zusammenfassend weist die Mehrzahl von Vertiefungen in dem stabförmigen Gehäuse gemäß beispielhaften Ausführungsformen hierin ein Paar von Vertiefungen bzw. Auskragungen auf, die im gegenüberliegenden Seitenflächen des stabförmigen Gehäuses gebildet sind. Beim Entformen des Formkerns steht das Paar von Vertiefungen mit einem Paar von Auskragungen in Eingriff. Dadurch wird das hergestellt Gehäuse im Formwerkzeug derart gehaltert, dass beim Entformen auftretenden mechanische Kräfte keine mechanischen Spannungen im gebildeten Gehäuse hervorrufen, die zu einer Beschädigung des Gehäuses führen. Das Entformen des Formkerns kann dann mittels eines Greifelements, beispielsweise eines mechanischen Greifelements, oder mittels einer Hand eines Benutzers durchgeführt werden, wobei der Formkern seitlich durch die Aufnahme des Formgegenstücks herausgezogen werden kann.

Durch das oben beschriebene Verfahren zum Herstellen eines stabförmigen Gehäuses unter Verwendung des oben beschriebenen Formwerkzeugs wird ein stabförmiges Gehäuse für eine Stabantenne bereitgestellt, wobei am stabförmigen Gehäuse Vertiefungen als Gegenhalt-Profil eingearbeitet sind, um die Kräfte beim Herausziehen des Formkerns während des Entformens aufnehmen zu können. Die am stabförmigen Gehäuse bereitgestellten Vertiefungen stellen dabei keine zusätzlichen Geometrien dar, die nach außen hervorstehen und somit einen vorgegebenen Bauraum überschreiten würden.

## Patentansprüche

1. Formwerkzeug (200) zum Formen eines stabförmigen Gehäuses (100) für eine Stabantenne, wobei das Formwerkzeug (200) umfasst:
einen stabförmigen Formkern (210); und
ein Formgegenstück (220) mit einer Aufnahme (225), in die der Formkern (210) einsetzbar ist,
wobei das Formgegenstück (220) eine Mehrzahl von Vertiefungen (245) und/oder Auskragungen (240) aufweist, die in wenigstens einer Oberfläche der Aufnahme (225) gebildet sind und die entlang einer Richtung verlaufen, die zu einer Längsrichtung des Formgegenstücks (220) quer orientiert ist,
**dadurch gekennzeichnet, dass**
für jede Vertiefung, die durch das Formwerkzeug (200) im stabförmigen Gehäuse (100) gebildet wird, eine Seitenwand mit einer Neigung unter einem spitzen Winkel relativ zur Seitenfläche des Gehäuses (100) vorgesehen ist, wobei diese Seitenwand eine Kraft aufnimmt, die bei einem Entformen des Formkerns aus dem Gehäuse auftritt.

2. Formwerkzeug (200) nach Anspruch 1, wobei die Vertiefungen (245) und/oder Auskragungen (240) zueinander parallel orientiert sind.

3. Formwerkzeug (200) nach Anspruch 1 oder 2, wobei die Aufnahme (225) derart ausgebildet ist, dass der Formkern (210) entlang einer Längsrichtung des Formkerns (210) in die Aufnahme (225) eingeschoben werden kann.

4. Formwerkzeug (200) nach einem der Ansprüche 1 bis 3, wobei die Mehrzahl von Vertiefungen (245) und/oder Auskragungen (240) in regelmäßigen Abständen entlang der Längsrichtung des Formgegenstücks (220) gebildet ist.

5. Formwerkzeug (200) nach einem der Ansprüche 1 bis 4, wobei die Mehrzahl von Vertiefungen (245) und/oder Auskragungen (240) aus Paaren von Vertiefungen und/oder Auskragungen gebildet ist, die an einander gegenüberliegenden Oberflächen des Formgegenstücks (220) in der Aufnahme (225) gebildet sind.

6. Formwerkzeug (200) nach einem der Ansprüche 1 bis 5, wobei jede aus der Mehrzahl von Vertiefungen (245) und/oder Auskragungen (240) in Aufsicht eine streifenförmige Gestalt aufweist.

7. Verfahren zum Herstellen eines stabförmigen Gehäuses (100) für eine Stabantenne, wobei das Verfahren in dieser Reihenfolge umfasst:
ein Bereitstellen des Formwerkzeugs (200) nach einem der Ansprüche 1 bis 6;
ein Anordnen des Formkerns (210) in der Aufnahme (225) des Formgegenstücks (220);
ein Einspritzen eines Spritzmaterials in das Formwerkzeug (200), wobei in dem Formwerkzeug (200) ein stabförmiges Gehäuse (100) nach einem Aushärten des Spritzmaterials erzeugt wird, wobei das stabförmige Gehäuse (100) eine Mehrzahl von Vertiefungen (130) aufweist; und
ein Entformen des Formkerns (210) von dem erzeugten stabförmigen Gehäuse (100), wobei die Mehrzahl von Vertiefungen (130) des stabförmigen Gehäuses (100) beim Entformen des Formkerns (210) mit der Mehrzahl von Vertiefungen (245) und/oder Auskragungen (240) des Formgegenstücks (220) in Eingriff steht und zwischen dem Formkern (210) und dem stabförmigen Gehäuse (100) eine Kraft aufgewendet wird, um den Formkern (210) aus dem stabförmigen Gehäuse (100) zu entfernen.

8. Verfahren nach Anspruch 7, wobei die Mehrzahl von Vertiefungen (130) des stabförmigen Gehäuses (100) ein Paar von Vertiefungen aufweist, die in gegenüberliegenden Seitenflächen des stabförmigen Gehäuses (100) gebildet sind und mit entsprechenden Vertiefungen und/oder Auskragungen der Mehrzahl von Vertiefungen (245) und/oder Auskragungen (240) des Formgegenstücks (220) beim Entformen in Eingriff steht.

9. Stabantenne mit einem stabförmigen Gehäuse (100), wobei das stabförmige Gehäuse (100) gemäß dem Verfahren nach Anspruch 7 oder 8 hergestellt ist, und einem Magnetkern, der in das stabförmige Gehäuse (100) aufgenommen ist.

10. Stabantenne nach Anspruch 9, wobei die Mehrzahl von Vertiefungen (130) aus Paaren von Vertiefungen gebildet ist, die in gegenüberliegenden Seitenflächen des stabförmigen Gehäuses (100) gebildet sind.

11. Stabantenne nach Anspruch 9, wobei die Mehrzahl von Vertiefungen (130) aus Vertiefungen gebildet ist, die lediglich in einer Seitenfläche des stabförmigen Gehäuses (100) gebildet sind.

12. Stabantenne nach einem der Ansprüche 9 bis 11, wobei die Mehrzahl von Vertiefungen (130) als streifenförmige Vertiefungen ausgebildet sind, die entlang einer Längsrichtung des stabförmigen Gehäuses (100) in regelmäßigem Abstand gebildet sind.

13. Stabantenne nach einem der Ansprüche 9 bis 12, wobei die Mehrzahl von Vertiefungen (130) als taschenförmige Vertiefungen ausgebildet sind, die entlang einer Längsrichtung des stabförmigen Gehäuses (100) in regelmäßigem Abstand gebildet sind.

14. Stabantenne nach einem der Ansprüche 9 bis 13, wobei wenigstens eine Seitenwand von wenigstens einer aus der Mehrzahl von Vertiefungen (130) relativ zu einer Seitenfläche des Gehäuses (100), in der die Seitenwand gebildet ist, unter einem Winkel geneigt ist, der um wenigstens 2° von 90° abweicht.

15. Stabantenne nach Anspruch 14, wobei sich die wenigstens eine Seitenwand entlang einer Richtung erstreckt, die zu einer Längsrichtung des stabförmigen Gehäuses (100) quer orientiert ist.

## Claims

1. Molding tool (200) for molding a rod-shaped housing (100) for a rod antenna, the molding tool (200) comprising:
a rod-shaped mold core (210); and
a molding counterpart (220) having a receptacle (225) into which the mold core (210) is insertable,
wherein the molding counterpart (220) has a plurality of recesses (245) and/or
protrusions (240) formed in at least one surface of the receptacle (225) and extending along a direction transversely oriented to a longitudinal direction of the molding counterpart (220),
**characterized in that**
a sidewall is provided with an inclination at an acute angle relative to the side surface of the housing (100) for each recess formed by the molding tool (200) in the rod-shaped housing (100), wherein this sidewall absorbs a force occurring during demolding of the mold core from the housing.

2. Molding tool (200) according to claim 1, wherein the recesses (245) and/or protrusions (240) are oriented parallel to each other.

3. Molding tool (200) according to claim 1 or 2, wherein the receptacle (225) is formed such that the mold core (210) is insertable into the receptacle (225) along a longitudinal direction of the mold core (210).

4. Molding tool (200) according to one of claims 1 to 3, wherein the plurality of recesses (245) and/or protrusions (240) are formed at regular spacing along the longitudinal direction of the molding counterpart (220).

5. Molding tool (200) according to one of claims 1 to 4, wherein the plurality of recesses (245) and/or protrusions (240) are formed of pairs of recesses and/or protrusions formed on opposite surfaces of the molding counterpart (220) in the receptacle (225).

6. Molding tool (200) according to one of claims 1 to 5, wherein each of the plurality of recesses (245) and/or protrusions (240) has a strip-like shape in a top view.

7. Method of manufacturing a rod-shaped housing (100) for a rod antenna, the method comprising, in this order:
providing the mold core (200) according to one of claims 1 to 6;
arranging the mold core (210) in the receptacle (225) of the molding counterpart (220);
injecting an injection material into the molding tool (200), wherein a rod-shaped housing (100) is created in the molding tool (200) after curing the injection material, the rod-shaped housing (100) having a plurality of recesses (130); and
demolding the mold core (210) from the produced rod-shaped housing (100), wherein the plurality of recesses (130) of the rod-shaped housing (100) are engaged with the plurality of recesses (245) and/or protrusions (240) of the molding counterpart (220) during demolding of the mold core (210), and a force is applied between the mold core (210) and the rod-shaped housing (100) to remove the mold core (210) from the rod-shaped housing (100).

8. Method of claim 7, wherein the plurality of recesses (130) of the rod-shaped housing (100) comprises a pair of recesses formed in opposing side surfaces of the rod-shaped housing (100) and engages respective recesses and/or protrusions of the plurality of recesses (245) and/or protrusions (240) of the molding counterpart (220) during demolding.

9. Rod antenna having a rod-shaped housing (100), wherein the rod-shaped housing (100) is manufactured according to the method of claim 7 or 8, and a magnetic core received into the rod-shaped housing (100).

10. Rod antenna according to claim 9, wherein the plurality of recesses (130) is formed of pairs of recesses formed in opposite side surfaces of the rod-shaped housing (100).

11. Rod antenna according to claim 9, wherein said plurality of recesses (130) is formed of recesses formed in only one side surface of the rod-shaped housing (100).

12. Rod antenna according to one of claims 9 to 11, wherein the plurality of recesses (130) are formed as strip-shaped recesses formed at regular spacing along a longitudinal direction of the rod-shaped housing (100).

13. Rod antenna according to one of claims 9 to 12, wherein the plurality of recesses (130) are formed as pocket-shaped recesses formed along a longitudinal direction of the rod-shaped housing (100) at regular spacing.

14. Rod antenna according to one of claims 9 to 13, wherein at least one side wall of at least one of the plurality of recesses (130) is inclined relative to a side surface of the housing (100) in which the side wall is formed at an angle deviating from 90° by at least 2°.

15. Rod antenna according to claim 14, wherein the at least one side wall extends along a direction transversely oriented to a longitudinal direction of the rod-shaped housing (100).

## Revendications

1. Moule (200) pour mouler un boîtier en forme de tige (100) pour une antenne tige, dans lequel le moule (200) comprend :
un noyau de moule en forme de tige (210) ; et
un contre-moule (220) avec un logement (225), dans lequel le noyau de moule (210) peut être inséré,
dans lequel le contre-moule (220) présente une pluralité d'évidements (245) et/ou de saillies (240), qui sont formés dans au moins une surface du logement (225) et s'étendant le long d'une direction transversale, qui est orientée par rapport à une direction longitudinale du contre-moule (220),
**caractérisé en ce que**
pour chaque évidement, qui est formé par le moule (200) dans le boîtier en forme de tige (100), une paroi latérale est pourvue d'une inclinaison selon un angle aigu par rapport à la surface latérale du boîtier (100), dans lequel ladite paroi latérale absorbe une force qui se produit lorsque le noyau de moule est retiré du boîtier.

2. Moule (200) selon la revendication 1, dans lequel les évidements (245) et/ou les saillies (240) sont orientés parallèlement les uns aux autres.

3. Moule (200) selon la revendication 1 ou 2, dans lequel le logement (225) est formé de telle sorte que le noyau de moule (210) peut être inséré dans le logement (225) le long d'une direction longitudinale du noyau de moule (210).

4. Moule (200) selon l'une quelconque des revendications 1 à 3, dans lequel la pluralité d'évidements (245) et/ou de saillies (240) sont formés à des intervalles réguliers le long de la direction longitudinale du contre-moule (220).

5. Moule (200) selon l'une quelconque des revendications 1 à 4, dans lequel la pluralité d'évidements (245) et/ou de saillies (240) sont formés de paires d'évidements et/ou de saillies, qui sont formées sur des surfaces mutuellement opposées du contre-moule (220) dans le logement (225).

6. Moule (200) selon l'une quelconque des revendications 1 à 5, dans lequel chacun de la pluralité d'évidements (245) et/ou de saillies (240) présente une forme de bande en vue de dessus.

7. Procédé de fabrication d'un boîtier en forme de tige (100) pour une antenne tige, dans lequel le procédé comprend dans cet ordre les étapes consistant à :
fournir le moule (200) selon l'une quelconque des revendications 1 à 6 ;
agencer le noyau de moule (210) dans le logement (225) du contre-moule (220) ;
injecter un matériau de moulage par injection dans le moule (200), dans lequel un boîtier en forme de tige (100) est produit dans le moule (200) après le durcissement du matériau de moulage par injection, dans lequel le boîtier en forme de tige (100) présente une pluralité d'évidements (130) ; et
démouler le noyau de moule (210) à partir du boîtier en forme de tige (100) produit, dans lequel la pluralité d'évidements (130) du boîtier en forme de tige (100) viennent en prise avec la pluralité d'évidements (245) et/ou de saillies (240) du contre-moule (220) pendant le démoule du noyau de moule (210), et une force est appliquée entre le noyau de moule (210) et le boîtier en forme de tige (100) afin de retirer le noyau de moule (210) à partir du boîtier en forme de tige (100).

8. Procédé selon la revendication 7, dans lequel la pluralité de d'évidements (130) du boîtier en forme de tige (100) présente une paire d'évidements qui sont formés dans des surfaces latérales opposées du boîtier en forme de tige (100), et qui viennent en prise avec des évidements et/ou des saillies correspondant(e)s de la pluralité d'évidements (245) et/ou de saillies (240) du contre-moule (220) lors du démoulage.

9. Antenne tige comprenant un boîtier en forme de tige (100), dans laquelle le boîtier en forme de tige (100) est fabriqué selon le procédé de la revendication 7 ou 8, et un noyau magnétique est reçu dans le boîtier en forme de tige (100).

10. Antenne tige selon la revendication 9, dans laquelle la pluralité d'évidements (130) sont formés à partir de paires d'évidements qui sont formés dans des surfaces latérales opposées du boîtier en forme de tige (100).

11. Antenne tige selon la revendication 9, dans laquelle la pluralité d'évidements (130) sont formés d'évidements qui sont formés uniquement dans une surface latérale du boîtier en forme de tige (100).

12. Antenne tige selon l'une quelconque des revendications 9 à 11, dans laquelle la pluralité d'évidements (130) sont formées sous la forme d'évidements en forme de bande, qui sont formés à des intervalles réguliers le long d'une direction longitudinale du boîtier en forme de tige (100).

13. Antenne tige selon l'une quelconque des revendications 9 à 12, dans laquelle la pluralité d'évidements (130) sont formés sous la forme d'évidements en forme de poche, qui sont formés à des intervalles réguliers le long d'une direction longitudinale du boîtier en forme de tige (100).

14. Antenne tige selon l'une quelconque des revendications 9 à 13, dans laquelle au moins une paroi latérale d'au moins l'un de la pluralité d'évidements (130) est inclinée par rapport à une surface latérale du boîtier (100), dans lequel la paroi latérale est formée, selon un angle qui diverge d'au moins 2° à 90°.

15. Antenne tige selon la revendication 14, dans laquelle la au moins une paroi latérale s'étend le long d'une direction qui est orientée transversalement par rapport à une direction longitudinale du boîtier en forme de tige (100).
